# EUROPEAN PATENT APPLICATION

(11) **EP 4 790 674 A1**
(43) Date of publication of application: **12.08.2026**
(21) Application number: 25769562.7
(22) Date of filing: 10.03.2025
(51) Int. Cl.: G07F 15/00, G07F 15/10, G07F 9/00, H04W 4/44

(54) **VEHICLE BATTERY MANAGEMENT METHOD AND APPARATUS, AND MEDIUM**

(30) Priority: 15.03.2024 CN 202410299595
(71) Applicant: Zhejiang Geely Holding Group Co., Ltd., Hangzhou, Zhejiang 310051 (CN); University of Sanya, Sanya, Hainan 572022 (CN)
(72) Inventor: LI, Shufu, Hangzhou, Zhejiang 310051 (CN)
(74) Representative: Boult Wade Tennant LLP
(86) International application number: PCT/CN2025/081663
(87) International publication number: WO 2025/190233

(57) **Abstract**

The present application provides a method and apparatus for managing a vehicle battery, and a medium, relating to the technical field of vehicle batteries. In this solution, a battery assembly includes at least one battery cell and a battery management unit connected thereto. The battery management unit is configured to manage an electric power of each battery cell, and configure the electric power of each battery cell into a free electric power interval for free use by a user and a paid electric power interval requiring paid unlocking for use, and can lock or unlock the use of the paid electric power interval of the battery cell. The method for managing a vehicle battery effectively reduces safety problems caused by overcharging and over-discharging during battery use through online power management.

## Description

This application claims priority to Chinese Patent Application No. 2024102995959, filed with the China National Intellectual Property Administration on March 15, 2024 and entitled "METHOD AND APPARATUS FOR MANAGING VEHICLE BATTERY, AND MEDIUM". The entire contents of the aforementioned applications are incorporated herein by reference.

### TECHNICAL FIELD

The present application relates to the technical field of vehicle batteries, and in particular to a method and apparatus for managing vehicle battery, and a medium.

### BACKGROUND

With the continuous advancement of electric vehicle technology, the demand for improving the driving range of electric vehicles is also increasing year by year.

Currently, increasing battery capacity and improving battery energy density are two common methods for improving the driving range of electric vehicles at this stage. Specifically, increasing battery capacity refers to increasing the number of batteries to enhance the energy storage capacity of the entire vehicle. This involves installing more battery cells or battery packs within the vehicle to increase a total battery capacity. Improving the energy density of the battery is achieved by enhancing the energy storage capacity of the battery per unit volume or unit weight to improve the driving range.

However, although the existing methods for improving the driving range of electric vehicles have achieved an increase in driving range to a certain extent, excessive charging and discharging may lead to aggravated battery loss, shortened its lifespan, and even increase the risk of spontaneous combustion.

### SUMMARY

In view of the problems existing in the prior art, the present application provides a method and apparatus for managing a vehicle battery, and a medium. Through a novel battery with partition electric power management, the charging and discharging usage habits of ordinary consumers will be changed, reduces the probability of overcharging and over-discharging, lowers the difficulty of consistency management of vehicle batteries in the prior art, greatly reduces the possibility of thermal runaway, and ensures the safety of the vehicle and consumers.

In a first aspect, the present application provides a battery assembly, including:
at least one battery cell, and a battery management unit respectively connected to the at least one battery cell;
where the battery management unit is configured to manage an electric power of each battery cell, and configure the electric power of each battery cell into a free electric power interval for free use by a user and a paid electric power interval requiring paid unlocking for use; and
the battery management unit is further configured to lock or unlock use of the paid electric power interval of the battery cell.

In a possible design of the first aspect, the battery assembly includes:
an effective voltage range corresponding to the paid electric power interval of each battery cell is from a first preset voltage to a second preset voltage;
an effective voltage range corresponding to the free electric power interval of each battery cell is from the second preset voltage to a third preset voltage;
where the first preset voltage is less than the second preset voltage, the second preset voltage is less than the third preset voltage, and the first preset voltage is greater than 0, and the third preset voltage is less than a maximum rated voltage of the battery cell.

In a possible design of the first aspect, the battery assembly includes:
a value range of the first preset voltage is 1.5V to 2.75V;
a value range of the second preset voltage is 3.1V to 3.9V; and
a value range of the third preset voltage is 3.9V to 4.0V.

In a possible design of the first aspect, a value of the first preset voltage is 2.15V, a value of the second preset voltage is 3.2V, and a value of the third preset voltage is 3.96V.

In a possible design of the first aspect, the battery management unit is further configured to detect a voltage value of each battery cell when the at least one battery cell is being charged; if the voltage value of the battery cell reaches a fourth preset voltage, push battery overcharge warning information to an output device and/or control to stop charging the at least one battery cell; and
where the fourth preset voltage is greater than the third preset voltage, and the fourth preset voltage is less than the maximum rated voltage.

In a possible design of the first aspect, a value range of the fourth preset voltage is 4V to 4.5V.

In a possible design of the first aspect, each battery cell is any one of the following batteries: a lithium battery, a lithium iron phosphate battery, or a solid-state battery.

In a second aspect, the present application provides a vehicle, including:
a control unit and any one of the battery assemblies according to the first aspect;
where the control unit is connected to the battery management unit in the battery assembly, and the control unit is further connected to a cloud platform via wireless communication.

In a possible design of the second aspect, the vehicle further includes:
an output device, configured to display confirmation information for paid electric power usage, the confirmation information for paid electric power usage including payment information provided to a user for paying a usage fee of a paid electric power interval, the payment information including a payment page or a payment QR code.

In a possible design of the second aspect, the output device is a vehicle-mounted terminal or a mobile terminal of the user, and the vehicle-mounted terminal or the mobile terminal displays the payment information through a program for online battery supervision.

In a third aspect, the present application provides a method for managing a vehicle battery, including:
detecting a remaining electric power of each battery cell of the vehicle in real time; and
if a remaining electric power of a battery cell reaches a preset paid electric power interval, locking use of the battery cell, and pushing confirmation information for paid electric power usage, the confirmation information for paid electric power usage including payment information provided to a user for paying a usage fee of the paid electric power interval.

In a possible design of the third aspect, the method further includes:
receiving payment confirmation information sent by a cloud platform, the payment confirmation information being used to indicate whether the user has paid the usage fee of the paid electric power interval of the battery cell; and
if the payment confirmation information indicates that the user has paid the usage fee of the paid electric power interval of the battery cell, performing an unlocking process on the use of the battery cell, so that the battery cell continues to discharge.

In a possible design of the third aspect, the method further includes:
if the payment confirmation information indicates that the user has not paid the usage fee of the paid electric power interval of the battery cell, continuing locking the battery cell;
   or,
upon receiving instruction information sent by a mobile terminal of the user or a vehicle-mounted terminal indicating not to use the paid electric power of the battery cell, continuing locking the battery cell.

In a fourth aspect, the present application provides a method for managing a vehicle battery, including:
obtaining battery cell consistency information, consistency information of a free electric power interval, and consistency information of a paid electric power interval in a battery assembly of a vehicle; and
performing a safety management on a faulty battery in the battery assembly according to the battery cell consistency information, the consistency information of the free electric power interval, and the consistency information of the paid electric power interval.

In a possible design of the fourth aspect, the performing the safety management on the faulty battery in the battery assembly according to the battery cell consistency information, the consistency information of the free electric power interval, and the consistency information of the paid electric power interval includes:
determining whether there is the faulty battery in the battery assembly according to the battery cell consistency information, the consistency information of the free electric power interval, and the consistency information of the paid electric power interval; and
if there is at least one faulty battery in the battery assembly, performing the safety management on the at least one faulty battery during a charging or discharging process of the battery assembly.

In a possible design of the fourth aspect, the battery cell consistency information includes temperature abnormality information, voltage information, current information, and resistance information of each battery cell;
the consistency information of the free electric power interval includes voltage information, current information, and resistance information of the free electric power interval of each battery cell; and
the consistency information of the paid electric power interval includes voltage information, current information, and resistance information of the paid electric power interval of each battery cell.

In a fifth aspect, the present application provides an apparatus for managing a vehicle battery, including:
a detection module, configured to detect a remaining electric power of each battery cell of a vehicle in real time; and
a processing module, configured to, if a remaining electric power of a battery cell reaches a preset paid electric power interval, lock use of the battery cell, and push confirmation information for paid electric power usage, the confirmation information for paid electric power usage including payment information provided to a user for paying a usage fee of the paid electric power interval.

In a sixth aspect, the present application provides an apparatus for managing a vehicle battery, including:
an acquisition module, configured to obtain battery cell consistency information, consistency information of a free electric power interval, and consistency information of a paid electric power interval in a battery assembly of a vehicle; and
a processing module, configured to perform a safety management on a faulty battery in the battery assembly according to the battery cell consistency information, the consistency information of the free electric power interval, and the consistency information of the paid electric power interval.

In a seventh aspect, the present application provides a computer-readable storage medium, where the computer-readable storage medium stores computer-executable instructions, and the computer-executable instructions, when executed by a processor, are configured to implement the method for managing a vehicle battery according to any one of the third aspect or the fourth aspect.

In an eighth aspect, the present application provides a computer program product, where the computer program product includes a computer program, and the computer program, when executed by a processor, is configured to implement the method for managing a vehicle battery according to any one of the third aspect or the fourth aspect.

The present application provides a battery assembly, a vehicle, and a method for managing a vehicle battery, which can be used in the technical field of vehicle batteries. In this solution, the vehicle includes a battery assembly, a battery management unit, and a control unit. During a driving process of the vehicle, the battery management unit detects a remaining electric power of each battery cell in real time, and locks a usage right of the battery cell when a remaining electric power of a battery cell reaches a preset paid electric power interval. After receiving payment confirmation information, it determines whether to unlock the use of the battery cell, thereby reducing a number of times consumers use it intentionally or unintentionally, cultivating good usage habits, reducing safety problems caused by overcharging and over-discharging, and improving safety. At the same time, the control unit of the vehicle obtains the battery cell consistency information, the consistency information of the free electric power interval, and the consistency information of the paid electric power interval in the battery assembly of the vehicle in real time, so as to ensure a safety management of a faulty battery, achieving a comprehensive real-time safety protection.

### BRIEF DESCRIPTION OF DRAWINGS

In order to more clearly illustrate the technical solutions in embodiments of the present invention or in the prior art, the following will briefly introduce the drawings required for use in the description of the embodiments or the prior art. Obviously, the drawings in the following description are only some embodiments of the present invention. For those of ordinary skill in the art, other drawings can be obtained based on these drawings without creative effort.
FIG. 1 is a schematic diagram of a battery assembly provided by the present application.
FIG. 2 is a schematic diagram of battery electric power and voltage range provided by the present application.
FIG. 3 is another schematic diagram of battery electric power and voltage range provided by the present application.
FIG. 4 is a schematic diagram of a vehicle provided by the present application.
FIG. 5 is a schematic diagram of another vehicle provided by the present application.
FIG. 6 is a schematic diagram of an application scenario of a method for managing a vehicle battery provided by the present application.
FIG. 7 is a schematic flowchart of a first embodiment of a method for managing a vehicle battery provided by the present application.
FIG. 8 is a schematic flowchart of a second embodiment of a method for managing a vehicle battery provided by the present application.
FIG. 9 is a schematic flowchart of a third embodiment of a method for managing a vehicle battery provided by the present application.
FIG. 10 is a schematic flowchart of a fourth embodiment of a method for managing a vehicle battery provided by the present application.
FIG. 11 is a schematic flowchart of a fifth embodiment of a method for managing a vehicle battery provided by the present application.
FIG. 12 is a schematic structural diagram of a first embodiment of an apparatus for managing a vehicle battery provided by the present application.
FIG. 13 is a schematic structural diagram of a second embodiment of an apparatus for managing a vehicle battery provided by the present application.
FIG. 14 is a schematic structural diagram of a third embodiment of an apparatus for managing a vehicle battery provided by the present application.

### DESCRIPTION OF EMBODIMENTS

The embodiments of the present invention are illustrated below through specific examples, and those skilled in the art can easily understand other advantages and effects of the present invention from the content disclosed in this specification. The present invention can also be implemented or applied through other different specific embodiments, and various modifications or changes can be made to the details in this specification based on different viewpoints and applications without departing from the spirit of the present invention. It should be noted that the following embodiments and features in the embodiments can be combined with each other without conflict. It should also be understood that the terms used in the embodiments of the present invention are for the purpose of describing specific embodiments only, and are not intended to limit the scope of protection of the present invention. For the test methods in the following embodiments that do not specify specific conditions, they are generally carried out according to conventional conditions, or according to the conditions suggested by each manufacturer.

When numerical ranges are given in the embodiments, it should be understood that, unless otherwise stated in the present invention, the two endpoints of each numerical range and any numerical value between the two endpoints can be selected. Unless otherwise defined, all technical and scientific terms used in the present invention have the same meaning as commonly understood by those skilled in the art based on the mastery of the prior art and the description of the present invention, and any methods, equipment, and materials similar or equivalent to those described in the embodiments of the present invention in the prior art can also be used to implement the present invention.

With the rapid development of electric vehicle technology, automakers and consumers have increasingly higher requirements for the driving range of electric vehicles.

At this stage, methods for improving the driving range of electric vehicles mainly involve increasing battery capacity and improving battery energy density. The method of increasing battery capacity is mainly realized by increasing the size and energy storage capacity of the battery to provide more electrical energy, thereby extending the driving range of the electric vehicle. The method of improving battery energy density is mainly realized by improving the energy storage efficiency and electrical energy output density of the battery, so as to store more energy under the same volume and weight, thereby achieving a longer driving range under limited battery capacity.

However, although increasing battery capacity and improving battery energy density may extend the driving range of electric vehicles to a certain extent, there also exists certain safety issues. First, high-capacity and high-density batteries may lead to accelerated degradation, and even cause spontaneous combustion problems. Second, during the use of the vehicle, if the lithium battery is subjected to excessive charging and discharging, it will seriously damage the consistency of the battery, accelerate the loss rate of the battery and shorten the life of the battery. In addition, excessive charging and discharging will also cause the energy stored inside the battery to be too large, increasing the possibility of spontaneous combustion. Each charge or discharge will cause irreversible damage to the battery, and this damage will have a cumulative effect. The more times of charge or discharge, the more significant the impact on battery performance. Again, many consumers apply the usage habits of fuel vehicles to electric vehicles, and have concerns about the driving range of the battery. These consumers lack understanding of the characteristics of battery maintenance, and may intentionally or unintentionally overcharging or over-discharging the battery, thereby seriously affecting the service life of the battery and increasing the safety problem of battery thermal runaway. In fact, most electric vehicles are mainly used for short-distance driving, and there is no need to worry too much about the driving range, and there is no need to frequently perform over-charging and over-discharging operations. Finally, although increasing the vehicle battery capacity can extend the driving range, in order to reduce the number of overcharges and over-discharges, slow down the battery degradation rate, and prevent vehicle thermal runaway or spontaneous combustion, the current conventional operation is realized by modifying the vehicle's battery management system through technologies such as over-the-air technology to lock a part of the electric power and reduce part of the driving range, thereby increasing the safe range of battery use. This operation is equivalent to making a trade-off between battery safety and driving range, but it is also easy for consumers to believe that the driving range of electric vehicles is falsely labeled.

In view of the above technical problems, the inventor found in the research process of the method for managing a vehicle battery that although increasing battery capacity and improving battery energy density can increase the driving range to a certain extent, there are also resource waste and safety protection problems caused by excessive charging and discharging. To this end, the inventor considered whether the electric power of each battery cell can be managed, configuring the electric power of each battery cell into a free electric power interval for free use by users and a paid electric power interval requiring paid unlocking use, thereby avoiding safety problems caused by excessive charging and discharging. Specifically, the electric power of the battery is divided into two parts for management, one part is the free electric power interval for safe use, and the other part is the electricity interval that requires payment. Through online power supervision and cloud real-time monitoring, the safety problems caused by battery overcharging and over-discharging are reduced. When used for short distances, users can reduce the use of the paid electric power interval and only use the safe free electricity, which can avoid overcharging and over-discharging while satisfying daily needs. When used for long distances, they can unlock and use the paid electric power interval to increase the driving range, which can realize all-round online battery monitoring and improve vehicle safety.

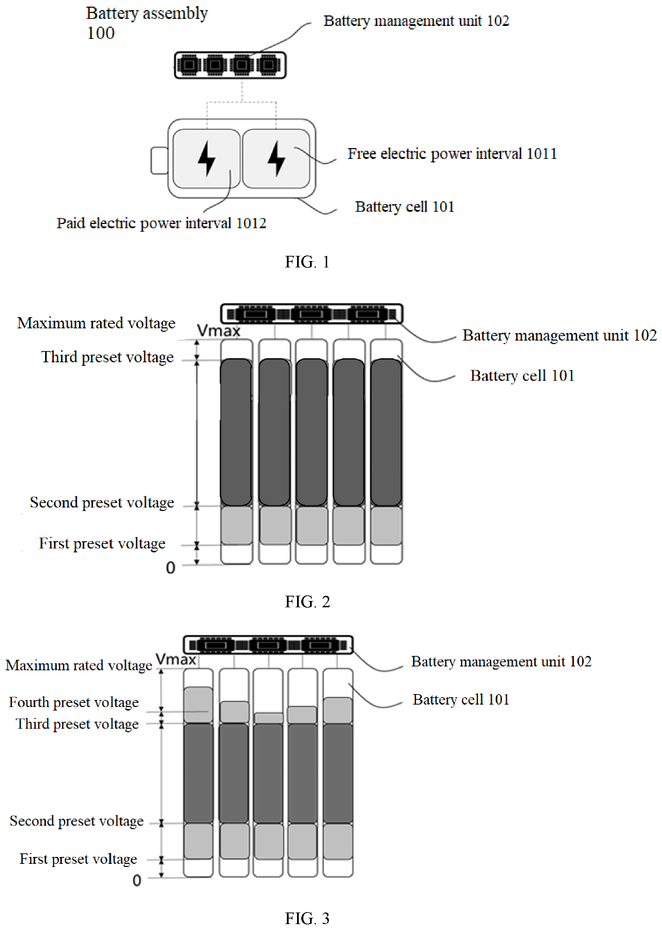

FIG. 1 is a schematic diagram of a battery assembly provided by the present application. As shown in FIG. 1, the battery assembly 100 includes at least one battery cells 101, and a battery management unit 102 connected to the at least one battery cells 101 respectively;
where the battery management unit 102 is configured to manage an electric power of each battery cell 101, and configure the electric power of each battery cell 101 into a free electric power interval 1011 for free use by a user and a paid electric power interval 1012 requiring paid unlocking for use;
the battery management unit 102 is further configured to lock or unlock use of the paid electric power interval 1012 of the battery cell 101.

Specifically, the battery assembly 100 is mainly arranged inside an electric vehicle as its core energy apparatus, providing stable power for the vehicle. In this battery assembly 100, it includes at least one battery cell 101, and a battery management unit 102 connected to the at least one battery cell 101.

In a possible implementation, each battery cell 101 is any one of the following batteries: a lithium battery, a lithium iron phosphate battery, or a solid-state battery. Lithium batteries are characterized by high energy density and lightweight, suitable for being applied in electric vehicle with critical requirements for energy density and weight. Lithium iron phosphate batteries have higher safety and stability, suitable for application scenarios requiring higher safety. Solid-state batteries, as an emerging technology, achieve a good balance between high energy density and safety, providing more reliable and durable power support for electric vehicles. By selecting the appropriate type of the battery cell 101, the battery assembly 100 can meet the needs of different vehicles and users, while providing more flexible and diversified energy solutions.

The battery management unit 102 is configured to manage an electric power of each battery cell 101, and configure an electric power of each battery cell 101 into a free electric power interval 1011 for free use by a user and a paid electric power interval 1012 requiring paid unlocking for use. Voltage value ranges of different battery cells 101 correspond to different free electric power intervals 1011 and paid electric power intervals 1012 of the battery cells.

A battery cell of conventional lithium battery is 2.5-4.25V. For a lithium battery pack, an electric power capacity range of a 3.7V lithium battery is 200-3300mAh, a capacity range of a 4.5V lithium battery is 550-1500mAh, a capacity range of a 4.35V lithium battery is 1700-3300mAh, a capacity range of a 7.4V lithium battery is 1000-2600mAh, a capacity range of a 7.2V lithium battery is 2200-5000mAh, a capacity range of an 11.1V lithium battery is 2400-4400mAh, a capacity range of a 14.8V lithium battery is 3000-6000mAh, a capacity range of an 18.5V lithium battery is 4000-8000mAh, and a capacity range of a 22.2V lithium battery is 5000-10000mAh.

In the free electric power interval 1011, users can freely use the energy stored in the battery to meet the needs of daily short-distance travel. In the paid electric power interval 1012, users can unlock use of additional electric power by paying a certain fee to cope with long-distance travel or urgent charging needs. The battery management unit 102 intelligently allocates electric power resources according to the user's needs and the actual situation of the vehicle, ensuring that users can obtain a convenient and efficient charging experience in different driving scenarios.

At the same time, the battery management unit 102 is further configured to lock or unlock use of the paid electric power interval 1012 of the battery cell 101. Specifically, after a remaining electric power of the vehicle reaches a preset condition, the battery management unit 102 will lock the paid electric power interval 1012 of the battery cell 101, and then unlock it for use after the user has paid an extra fee. At this time, users can choose to pay the extra fee to unlock the use of the paid electric power interval 1012 according to actual needs when needed, so as to obtain additional power support. After the user pays the corresponding fee, the battery management unit 102 will immediately unlock the use of the paid electric power interval 1012, enabling the user to immediately obtain additional electric power and continue to drive or charge. This flexible locking and unlocking mechanism effectively meets the user's flexible demand for power, and also provides users with more options and control power, thereby enhancing user experience and satisfaction.

In the battery assembly provided in this embodiment, by setting free and paid electric power intervals, the battery management unit not only guarantees the user's basic travel needs, but also provides users with flexible charging options. Users can flexibly choose whether to pay an extra fee to obtain additional electric power support according to their own needs, thereby meeting the charging needs in long-distance driving or emergency situations, improving the practicality and convenience of electric vehicles. At the same time, the battery management unit strictly monitors the use of electric power to ensure the safety and reliability of the charging and discharging process, providing users with a more secure experience.

FIG. 2 is a schematic diagram of battery electric power and voltage intervals provided by the present application. As shown in FIG. 2, an effective voltage range corresponding to the paid electric power interval of each battery cell 101 is from a first preset voltage to a second preset voltage;
an effective voltage range corresponding to the free electric power interval of each battery cell 101 is from the second preset voltage to a third preset voltage;
where the first preset voltage is less than the second preset voltage, the second preset voltage is less than the third preset voltage, and the first preset voltage is greater than 0, and the third preset voltage is less than a maximum rated voltage of the battery cell 101.

Specifically, in order to ensure that each battery cell 101 always maintains a voltage within a safe range during charging and discharging processes, it is necessary to set different voltage ranges to effectively manage the use of each battery cell 101. An effective voltage range corresponding to the paid electric power interval of each battery cell 101 is from a first preset voltage to a second preset voltage, and an effective voltage range corresponding to the free electric power interval of each battery cell 101 is from the second preset voltage to a third preset voltage. The first preset voltage is less than the second preset voltage, the second preset voltage is less than the third preset voltage, the first preset voltage is greater than 0, and the third preset voltage is less than a maximum rated voltage of the battery cell 101. The maximum rated voltage is a specified highest voltage value that the battery cell 101 can safely withstand during a design and manufacturing process thereof, which is determined based on the chemical characteristics, the structural design, and safety considerations of the battery cell.

For example, suppose there are multiple battery cells in a battery assembly of an electric vehicle. Under normal circumstances, charging or discharging level of each battery cell remain consistent. For example, an effective voltage range corresponding to the paid electric power interval is 1.5V to 3.1V, and an effective voltage range corresponding to the free electric power interval is 3.1V to 4.9V. During a discharging process of the battery cell, if it is detected that a voltage value corresponding to the battery cell drops to 3.1V, the battery management unit determines that the use of battery electric power has reached the paid electric power interval, and the use of the battery is locked. After the user has paid, the paid electric power interval is unlocked for the user to continue to use the remaining electric power of the battery. Such a setting can effectively limit the use of the battery, which avoids damage to the battery caused by overcharging or over-discharging and provides users with flexible charging options at the same time.

In this embodiment, by setting the effective voltage ranges of the paid electric power interval and the free electric power interval, the use of the battery cell can be effectively managed to prevent the battery from being overloaded or under-voltage during the charging or discharging process, thereby extending the service life of the battery and ensuring the safety of the charging process.

In a possible implementation, a value range of the first preset voltage is 1.5V to 2.75V; a value range of the second preset voltage is 3.1V to 3.9V; and a value range of the third preset voltage is 3.9V to 4.0V.

Specifically, an effective voltage range corresponding to the paid electric power interval of each battery cell is from a first preset voltage to a second preset voltage, and an effective voltage range corresponding to the free electric power interval of each battery cell is from the second preset voltage to a third preset voltage.

For example, a battery assembly built into a vehicle A includes a plurality of non-faulty battery cells, a first preset voltage value is 1.5V, a second preset voltage value is 3.1V, and a third preset voltage value is 3.9V, i.e., an effective voltage range corresponding to the paid electric power interval of the battery cell is 1.5V to 3.1V, and an effective voltage range corresponding to the free electric power interval is 3.1V to 3.9V. During a normal discharging process of the battery cell, the battery management unit detects voltage values of the plurality of battery cells in real time. If it is detected that the voltage value of a battery cell is 3.9V, which is within the free electric power interval that can be freely used by the user, the battery management unit does not need to take management measures for the battery, but only needs to continue to detect the voltage values of the plurality of battery cells. If it is detected that the voltage value of the battery cell drops to 3.1V, it is thus determined that the paid electric power interval that requires the user to pay for use has been reached, so the battery management unit locks the use of the paid electric power interval and outputs payment information through an output device, waiting for the user to pay and unlock it for continued use.

For another example, a battery assembly built into a vehicle B includes a plurality of non-faulty battery cells, a first preset voltage value is 2.75V, a second preset voltage value is 3.9V, and a third preset voltage value is 4.0V, so an effective voltage range corresponding to the paid electric power interval of the battery cell is 2.75V to 3.9V, and an effective voltage range corresponding to the free electric power interval is 3.9V to 4.0V. During a normal discharging process of the battery cell, the battery management unit detects voltage values of the plurality of battery cells in real time. If it is detected that the voltage value of a battery cell is 3.95V, which is within the free electric power interval that can be freely used by the user, the battery management unit does not need to take management measures for the battery, but only needs to continue to detect the voltage values of the plurality of battery cells. If it is detected that the voltage value of the battery cell drops to 3.9V, it is thus determined that the paid electric power interval that requires the user to pay for use has been reached, so the battery management unit locks the use of the paid electric power interval and outputs payment information through an output device, waiting for the user to pay and unlock it for continued use.

Optionally, a battery assembly built into a vehicle C includes a plurality of non-faulty battery cells, a first preset voltage value is 1.75V, a second preset voltage value is 3.2V, and a third preset voltage value is 3.95V, i.e., an effective voltage range corresponding to the paid electric power interval of the battery cell is 1.75V to 3.2V, and an effective voltage range corresponding to the free electric power interval is 3.2V to 3.95V.

Optionally, a battery assembly built into a vehicle D includes a plurality of non-faulty battery cells, a first preset voltage value is 2.6V, a second preset voltage value is 3.3V, and a third preset voltage value is 3.93V, so an effective voltage range corresponding to the paid electric power interval of the battery cell is 2.6V to 3.3V, and an effective voltage range corresponding to the free electric power interval is 3.3V to 3.93V.

In this embodiment, the value ranges of the first preset voltage, the second preset voltage, and the third preset voltage are mainly described in detail. By setting specific voltage value ranges, it can be ensured that during paid charging or discharging process, the voltage of the battery cell is always kept within a safe and effective range, which can avoid adverse effects of excessively high or low voltage on battery performance and life, thereby improving reliability and safety of the battery.

In a possible implementation, a value of the first preset voltage is 2.15V, a value of the second preset voltage is 3.2V, and a value of the third preset voltage is 3.96V.

Specifically, due to differences in the manufacturing structure and type of battery cells, actual voltage values thereof are different. In the battery cell provided in this embodiment, a value of the first preset voltage is 2.15V, a value of the second preset voltage is 3.2V, and a value of the third preset voltage is 3.96V, with an allowable voltage error of ±0.05V. Therefore, an effective voltage range corresponding to the paid electric power interval of each battery cell is 2.15V to 3.2V, and an effective voltage range corresponding to the free electric power interval of each battery cell is 3.2V to 3.96V.

For example, a battery assembly includes a plurality of battery cells, an effective voltage range corresponding to the paid electric power interval is 2.15V to 3.2V, and an effective voltage range corresponding to the free electric power interval is 3.2V to 3.96V. During a discharging process of the plurality of battery cells, the battery management unit continuously detects voltage values corresponding to the plurality of battery cells.

If it is detected that voltage values corresponding to a plurality of battery cells are 3.96V or 3.8V, indicating that they correspond to the free electric power intervals, the user can continue to use them and the battery management unit continues to detect the voltages corresponding to the plurality of battery cells.

If it is detected that voltage values corresponding to a plurality of battery cells are 3.2V, indicating that they correspond to the paid electric power intervals, the battery management unit immediately locks the paid electric power intervals, waiting for the user to pay and unlock them for continued use.

This embodiment mainly describes the specific values of the first preset voltage, the second preset voltage, and the third preset voltage. These specific numerical values provide clear guidance for the battery management unit, enabling it to effectively monitor and control the charging and discharging process of the battery cells, so as to ensure that the battery cells always operate within a safe range. This precise voltage setting helps to protect the battery to the greatest extent, optimize system performance, extend battery life, and improve reliability and efficiency of an overall system.

FIG. 3 is another schematic diagram of battery electric power and voltage intervals provided by the present application. As shown in FIG. 3, on the basis of any of the above embodiments, in a possible implementation, the battery management unit is further configured to: detect a voltage value of each battery cell when the at least one battery cell is being charged; if the voltage value of the battery cell reaches a fourth preset voltage, then push battery overcharge warning information to an output device and/or control to stop charging the at least one battery cell; where the fourth preset voltage is greater than the third preset voltage, and the fourth preset voltage is less than the maximum rated voltage.

Specifically, in addition to being configured to manage an electric power of each battery cell, the battery management unit is also configured to detect a voltage value of each battery cell when at least one battery cell is being charged. If a voltage value of the battery cell is in the free electric power interval, the user can continue to use it. If the voltage value of the battery cell is in the paid electric power interval, the use of this interval is locked. If the voltage value of the battery cell reaches the fourth preset voltage, the battery management unit pushes battery overcharge warning information to an output device and/or controls to stop charging the at least one battery cell.

The fourth preset voltage is predefined, its value is greater than the third preset voltage, and less than the maximum rated voltage. When charging a battery cell, the battery management unit needs to detect a voltage value of the battery cell being charged and compare it with the fourth preset voltage in real time. When a detected voltage value reaches the preset fourth preset voltage, it indicates that the battery cell is about to be fully charged, and there may be a possibility of overcharging.

In this case, the battery management unit will send battery overcharge warning information to an output device, notifying the user or a control system that the plurality of battery cells are about to be in a fully charged state, and corresponding measures need to be taken to avoid overcharging.

In this solution, it should be understood that due to different performances of each battery cell, the fourth preset voltage of each battery cell may be different.

At the same time, the battery management unit can also execute control commands to stop charging the at least one battery cell. This means that when the battery management unit detects a battery overcharge situation, it prevents continuous charging of the battery cell by controlling an output device. Such control measures are intended to prevent battery overcharging in a timely manner, thereby protecting the battery and ensuring safe operation of an entire system.

For example, a battery assembly of an electric vehicle includes a plurality of battery cells. When one of the battery cells is overcharged due to failure or other reasons, the battery management unit will immediately send battery overcharge warning information to a vehicle control system. At the same time, by controlling an output device, the battery management unit will command a charging system to stop charging the battery cell to avoid further exacerbating the possibility of battery overcharging.

The battery assembly includes a plurality of battery cells. The paid electric power interval corresponds to a range from a first preset voltage to a second preset voltage, and the free electric power interval corresponds to a range from the second preset voltage to a third preset voltage.

For example, during a charging process, when voltage values of the battery cells all reach a fourth preset voltage of one of the battery cells during charging, the battery management unit pushes battery overcharge warning information to an output device and/or controls to stop charging the battery cell that has reached an overcharging voltage threshold.

In practical applications, when an actual available stored electric power of a battery cell decreases, it indicates that the battery cell may be faulty, which may be ascribed to some possible reasons including over-discharging, battery aging, abnormal temperature, and circuit problems, etc. To deal with this fault, the battery management unit needs to take special online management measures according to a specific situation of the battery cell. For example, during a discharging process, an output electric power of the battery cell can be limited. During a next charging process, charging of the battery cell can be prohibited, etc.

Optionally, during a charging process of battery cells, when the battery management unit detects that a voltage of a battery cell reaches a fourth preset voltage, it locks the battery cell to prevent battery from overcharging, no longer receives charging, and informs the user through the output device that the battery cell has reached the fourth preset voltage and will no longer perform the charging operation. If the user still wants to charge the battery cell, they need to unlock the battery cell by paying or non-paying means to achieve the charging of the battery cell.

This embodiment mainly describes the function of the battery management unit, that is, when at least one battery cell is being charged, detecting a voltage value of each battery cell, and when it is found that the voltage value reaches the fourth preset voltage, preventing battery from overcharging by pushing warning information to an output device and/or controlling to stop charging at least one battery cell. Through this function, a situation of battery overcharging can be discovered and addressed in a timely manner, preventing damage and safety hazards caused by overcharging to the battery and an entire vehicle. At the same time, this function can improve a service life of the battery assembly, reduce battery loss and replacement costs, and enable the entire vehicle to operate more efficiently.

On the basis of any of the above embodiments, in a possible implementation, an overcharging voltage threshold of each battery cell, i.e., a value range of the fourth preset voltage, is 4V to 4.5V.

Specifically, the fourth preset voltage is greater than the third preset voltage and less than the maximum rated voltage. A value of the third preset voltage is 3.96V, and a value range of the fourth preset voltage is 4V to 4.5V.

For example, during a charging process of a battery cell, the battery management unit detects a voltage value corresponding to the battery cell. If a measured voltage value is 4V, it is indicated that the voltage of the battery cell has reached the fourth preset voltage. At this time, the battery management unit pushes battery overcharge warning information to an output device and/or controls to stop charging at least one battery cell.

Optionally, in actual situations, a value of the fourth preset voltage is generally set to 4.18V. The determination of this value is carried out though comprehensive consideration and practical verification. This value will not only prevent the battery cell from stopping charging prematurely, but also effectively avoid overcharging of the battery, thereby protecting safety of the battery and extending its service life.

This embodiment mainly describes the value range of the fourth preset voltage. By setting an appropriate fourth preset voltage range, the battery cell can be prevented from being overcharged during a charging process, thereby reducing safety problems such as overheating and liquid leakage of the battery. At the same time, by controlling the battery to stop charging within the fourth preset voltage range, the battery can be prevented from being in a high voltage state for a long time, reducing aging and loss of the battery, thereby extending the service life of the battery.

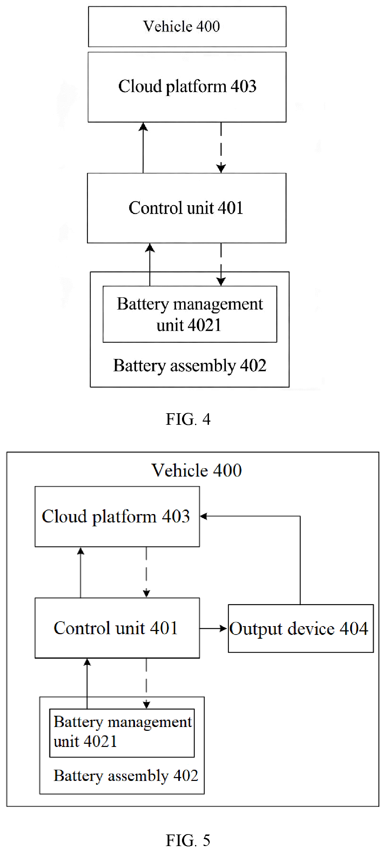

FIG. 4 is a schematic diagram of a vehicle provided by the present application. As shown in FIG. 4, the vehicle 400 includes a control unit 401 and a battery assembly 402.

The control unit 401 is connected to a battery management unit 4021 in the battery assembly 402, and the control unit 401 is further connected to a cloud platform 403 via wireless communication.

Specifically, the vehicle 400 includes a control unit 401 and a battery assembly 402. The control unit 401 is connected to a battery management unit 4021 in the battery assembly 402, and monitors parameters such as voltage, current, and temperature of the battery assembly 402 in real time to ensure safe operation of the battery assembly 402. When the battery management unit 4021 in the battery assembly 402 detects an abnormal situation, the control unit 401 will take corresponding measures, such as sending an alarm or stopping a charging and discharging operation, to avoid potential safety problems.

At the same time, the control unit 401 also establishes a wireless communication connection with the cloud platform 403 to achieve an interaction with the cloud by transmitting data and receiving instructions. Through the connection with the cloud platform 403, the control unit 401 can obtain latest data and instructions from the cloud, such as charging and discharging management strategy updates, remote diagnosis and control, etc. At the same time, it also uploads operating data of the battery assembly 402 to the cloud platform, providing support for vehicle maintenance, optimization, and remote monitoring.

This embodiment mainly describes a basic composition and function of a vehicle. The vehicle includes a control unit and a battery assembly, the control unit is connected to a battery management unit in the battery assembly, and ensures safety by monitoring and controlling an operating state of the battery assembly. At the same time, the control unit can also establish a wireless connection with a cloud platform to achieve data transmission and instruction interaction, improving the management efficiency and remote monitoring capability of the vehicle. This design is beneficial to achieving safe operation, optimized performance, and convenient remote management of the battery assembly, bringing positive effects to vehicle operation and maintenance.

On the basis of FIG. 4, FIG. 5 is another schematic diagram of a vehicle provided by the present application. As shown in FIG. 5, the vehicle 400 further includes:
an output device 404, configured to display confirmation information for paid electric power usage, the confirmation information for paid electric power usage including payment information provided to a user for paying a usage fee of the paid electric power interval, the payment information including a payment page or a payment QR code.

Specifically, in the battery assembly 402 of the vehicle 400, the battery management unit 4021 is responsible for monitoring and managing the state and usage of the battery cell. When the battery management unit 4021 detects that the free electric power interval of a battery cell is about to be exhausted, in order to ensure the user's power supply, it locks the paid electric power interval.

At this time, the output device 404 connected to the control unit 401 is triggered, and it displays confirmation information for paid electric power usage to the user. The confirmation information includes a current electric power consumption situation and a corresponding usage fee for the paid electric power interval, so that the user can clearly understand their own electric power consumption situation. At the same time, the output device 404 also provides payment information and payment methods like a payment page or a payment QR code, etc. for the user to complete a payment operation conveniently and quickly. The payment QR code, which is used for the user to scan the code to pay the fee corresponding to the paid electric power interval, is served as a feasible fee payment method, where a payment QR code is directly generated on the vehicle-mounted terminal, and the payment operation is realized through the payment QR code and a third-party payment platform or a bank.

The user can determine whether to pay the corresponding fee according to their own needs and actual situation. After the user scans the code and pays successfully, the cloud platform 403 obtains payment success information and sends unlocking information or an unlocking key to the control unit 401 of the vehicle. After receiving it, the vehicle control unit 401 sends the unlocking information or the unlocking key to the battery management unit 4021, and then the battery management unit 4021 unlocks the corresponding paid electric power interval, so that the battery cell can continue to provide electric power for the vehicle. If the user does not pay, the battery management unit 4021 will take corresponding measures, such as cutting off a power supply, to ensure safe and stable operation of the vehicle.

This embodiment mainly describes an important role of the output device in vehicle battery management. It can provide the user with payment information for paying the usage fee of the paid electric power interval by displaying the confirmation information for paid electric power usage. In this way, the user can clearly understand their own power consumption situation and can complete the payment operation conveniently and quickly, thereby enhancing the user's experience and satisfaction.

On the basis of the above embodiment, in a possible implementation, the output device is a vehicle-mounted terminal or a mobile terminal of the user, and the vehicle-mounted terminal or the mobile terminal displays the payment information through a program for online battery supervision.

Specifically, the output device can be a vehicle-mounted terminal or a mobile terminal of the user. Through these terminal devices, users can supervise use of the battery online anytime and anywhere, and the payment information is displayed. When the battery management unit monitors that power is about to be exhausted or a payment is required, relevant information is transmitted to the vehicle-mounted terminal or the mobile terminal of the user through the output device.

The vehicle-mounted terminal generally refers to a control device installed on a vehicle for managing systems and functions related to the vehicle. In battery management, the vehicle-mounted terminal can be connected to the battery management unit and display payment information through a program for online battery supervision. Users can view power consumption and payment information on a screen of the vehicle-mounted terminal to make decisions and operations in a timely manner.

The mobile terminal of the user refers to a mobile device carried by the user, such as a smartphone. Users can check payment information displayed through a program for online battery supervision via an application or webpage on the mobile terminal. Users can view power consumption and payment information anytime and anywhere through the mobile terminal to make corresponding decisions and operations.

For example, the output device is the mobile terminal of the user, and the mobile terminal of the user is provided with an online battery management application program for payment. The online battery management application program for payment is connected to the cloud platform through the mobile terminal via wireless communication, and is used to send payment unlocking information to the cloud platform. Alternatively, a fee is collected directly through the online battery management application program for payment on the mobile terminal. After the fee is successfully collected, the cloud platform sends unlocking information or an unlocking key to the control unit of the vehicle, or, to the mobile terminal of the user, and then the user inputs the unlocking information or unlocking key into the control unit of the vehicle.

This embodiment summarizes two types of output devices in the battery management unit: the vehicle-mounted terminal and the mobile terminal of the user. Both devices can display payment information through a program for online battery supervision, helping users to understand use of the battery anytime and anywhere. Through the use of these output devices, users can conveniently monitor electric power and payment information and make decisions and operations in a timely manner, which improves the user experience and realizes a higher intelligence and convenience.

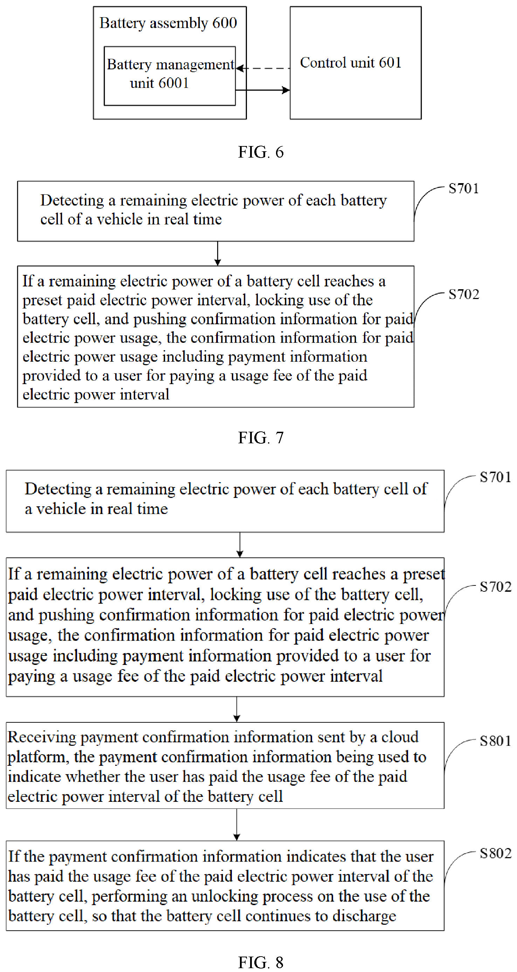

FIG. 6 is a schematic diagram of an application scenario of a method for managing a vehicle battery provided by the present application. As shown in FIG. 6, the application scenario of the solution provided by the present application includes a battery assembly 600 and a control unit 601. The battery assembly 600 includes a battery management unit 6001.

Specifically, the battery management unit 6001 included in the battery assembly 600 built into the vehicle manages an electric power of each battery cell, and configures the electric power of each battery cell into a free electric power interval for free use by a user and a paid electric power interval requiring paid unlocking for use. During a driving process of the vehicle, the battery management unit 6001 detects electric power of each battery cell in real time, and locks or unlocks the paid electric power interval as needed to protect the battery cell and improve safety. The battery management unit 6001 performs real-time data interaction with the control unit 601 to execute a control instruction from the control unit 601.

FIG. 7 is a schematic flowchart of a first embodiment of a method for managing a vehicle battery provided by the present application. As shown in FIG. 7, the method for managing a vehicle battery includes:
S701: detecting a remaining electric power of each battery cell of a vehicle in real time.

In this step, when the vehicle is running, the battery management unit arranged inside the vehicle needs to detect the remaining electric power of each battery cell in the vehicle in real time.

Specifically, the battery management unit obtains and records electric power information of each battery cell in real time through sensors connected thereto. This information can be displayed to the user through means such as a vehicle display screen or a mobile phone. The user can know the remaining electric power of each battery cell at any time to make corresponding decisions and adjustments.

Optionally, the battery management unit can not only detect the remaining electric power of the battery in real time, but also monitor parameters such as temperature and voltage of the battery. When it is found that an electric power of a battery cell drops abnormally or its temperature rises abnormally, the battery management unit will send warning information to notify the user in time so that corresponding measures can be taken to avoid potential safety problems.

S702: if a remaining electric power of a battery cell reaches a preset paid electric power interval, locking use of the battery cell, and pushing confirmation information for paid electric power usage, the confirmation information for paid electric power usage including payment information provided to a user for paying a usage fee of the paid electric power interval.

In this step, based on step S701, when the battery management unit detects a remaining electric power of each battery cell of the vehicle in real time, if a remaining electric power of a battery cell reaches a preset paid electric power interval, the use of the battery cell is locked, and confirmation information for paid electric power usage is pushed.

Specifically, when a remaining electric power of a battery cell reaches a set paid electric power interval, the battery management unit automatically locks the use of the battery cell to prevent the user from continuing to consuming electric power. At the same time, the battery management unit pushes confirmation information for paid electric power usage to the user, including providing information about relevant fees for using the electric power in this interval, so that the user can confirm and pay corresponding fees.

The preset paid electric power interval refers to an electric power range set in advance in a battery use management unit. When a remaining electric power of a battery cell is within this range, the user needs to pay a corresponding fee to continue to use the electric power. The arrangement of this interval is usually determined according to the user's needs and the service provider's strategy. Upper and lower limits of this interval can be set according to battery capacity, a vehicle model, or the user's personal needs. For example, the preset paid electric power interval can be set to charge a fee when the remaining electric power of the battery is below 30%. When a remaining electric power of the battery exceeds this interval, the user can freely use the electric power without paying an extra fee. But once the electric power is within the preset paid interval range, the user needs to confirm and pay the corresponding fee to continue to use the battery.

When a remaining electric power of a battery cell reaches a preset paid electric power interval, the battery management unit can lock the use of the battery cell by software or hardware means. Specific locking operations may include software control locking, hardware power-off locking, and remote control locking. The software control locking refers to that a remaining electric power of a battery cell is monitored and identified through a software program in the battery management unit, and once it is detected that an electric power of a battery cell enters a preset paid interval, the software sends an instruction to the battery management unit, requesting to lock the battery cell. As a result, the battery cell can no longer supply power to the vehicle, thereby limiting the user's continued use. The hardware power-off locking refers to locking a battery cell through a hardware device. For example, a switch or circuit breaker can be set in the battery management unit. When an electric power reaches a preset interval, the battery management unit will automatically cut off a connection between the battery and the vehicle, so that the battery cannot output electric power, thereby achieving a locked state. The remote control locking refers to locking the battery cell through remote control of the battery management unit via a network when an electric power of a battery cell reaches the preset interval.

In this solution, it should be understood that monitoring of a remaining electric power can be determined by an effective voltage of the battery. Referring to the example shown in the embodiment of the aforementioned FIG. 1, the battery management unit or the control unit obtains a real-time voltage of each battery cell, and determines whether to lock or unlock the use of the battery according to a magnitude of the voltage value, an effective voltage range corresponding to the preset free electric power interval, and an effective voltage range corresponding to the paid electric power interval.

The method for managing a vehicle battery provided in this embodiment can effectively lock the battery cell, ensuring that the user needs to pay a fee to continue to use the electric power when reaching the paid electric power interval. This locking mechanism can encourage users to save power, use resources reasonably, and promote sustainable development of an electric vehicle market.

FIG. 8 is a schematic flowchart of a second embodiment of a method for managing a vehicle battery provided by the present application. As shown in FIG. 8, the method for managing a vehicle battery further includes:
S801: receiving payment confirmation information sent by a cloud platform, the payment confirmation information being used to indicate whether the user has paid the usage fee of the paid electric power interval of the battery cell.

In this step, based on step S702, if a remaining electric power of a battery cell reaches the preset paid electric power interval, the use of the battery cell is locked, and confirmation information for paid electric power usage is pushed. After receiving the confirmation information for paid electric power usage, the user needs to choose whether to pay a fee according to actual needs.

When the user completes a payment operation, a relevant payment system generates payment confirmation information and sends the information to the cloud platform via a network. The payment confirmation information is used to indicate whether the user has paid the usage fee of the paid electric power interval of the battery cell. After receiving the payment confirmation information, the cloud platform parses and verifies it to confirm the user's payment status. Once it is confirmed that the user has completed the payment, the cloud platform updates the user's battery usage permission accordingly, releases the lock on the battery cell, so that the user can continue to use the electric power. Throughout the process, the payment confirmation information can transmit the user's payment status in a timely manner, helping the cloud platform determine whether to release the lock on the battery cell.

S802: if the payment confirmation information indicates that the user has paid the usage fee of the paid electric power interval of the battery cell, performing an unlocking process on the use of the battery cell, so that the battery cell continues to discharge.

In this step, based on step S801, after the battery management unit receives the payment confirmation information sent by the cloud platform, when the payment confirmation information indicates that the user has paid the usage fee of the paid electric power interval of the battery cell, it indicates that the user has completed the corresponding payment and meets the condition for continuing to use the battery cell. Therefore, the battery management unit will perform an unlocking process, allowing the battery cell to continue discharging.

The unlocking process includes updating a system status so that a usage permission of the battery cell is restored, so that the user can continue to freely use the electric power provided by the battery cell without any restrictions.

The method for managing a vehicle battery provided in this embodiment, by receiving payment confirmation information from the cloud platform, and unlocking a battery cell and allowing it to continue to discharge after confirming that the user has paid the fee for using the battery cell, ensures that the user can use the electric power smoothly. This method provides users with reliable services, ensures that users can continue to use power smoothly after completing payment, and at the same time, ensures the safe and stable operation of the vehicle.

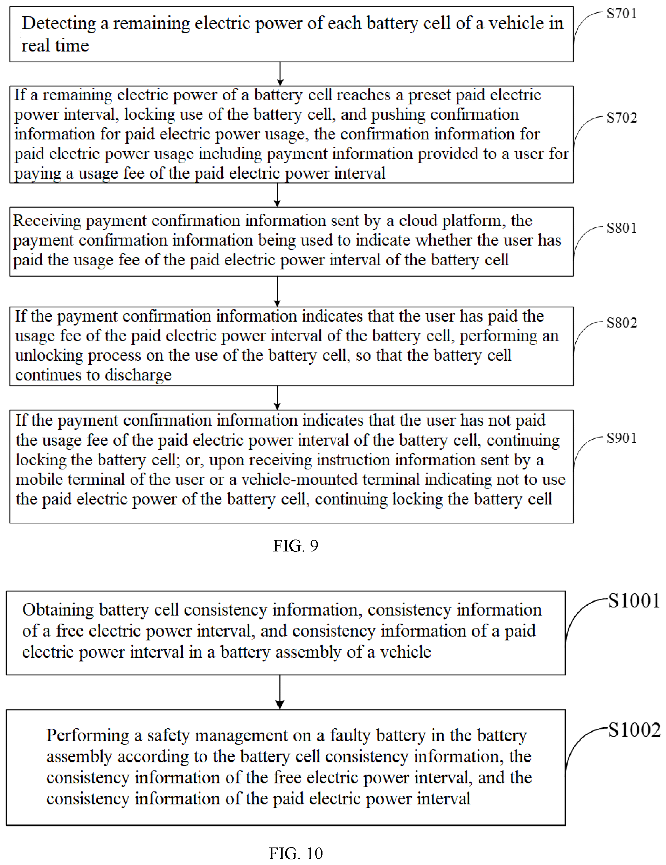

FIG. 9 is a schematic flowchart of a third embodiment of a method for managing a vehicle battery provided by the present application. As shown in FIG. 9, the method for managing a vehicle battery further includes:
S901: if the payment confirmation information indicates that the user has not paid the usage fee of the paid electric power interval of the battery cell, continuing locking the battery cell; or,
upon receiving instruction information sent by a mobile terminal of the user or a vehicle-mounted terminal indicating not to use the paid electric power of the battery cell, continuing locking the battery cell.

In this step, based on step S801, the battery management unit makes a judgement after receiving the payment confirmation information sent by the cloud platform. If the payment confirmation information indicates that the user has not paid the usage fee of the paid electric power interval of the battery cell, it means that the user has not completed the corresponding payment, so it is necessary to continue locking the battery cell. Such an operation ensures that the user cannot continue to use the electric power before completing the payment, so as to avoid waste of resources and unauthorized use.

Meanwhile, in some cases, the battery management unit will also receive instruction information sent by the user via the mobile terminal or vehicle-mounted terminal, indicating not to use the paid electric power of the battery cell. In this case, it is also necessary to continue locking the battery cell to meet the user's needs and ensure rational use of battery resources.

According to the method for managing a vehicle battery provided in this embodiment, based on the payment confirmation information and the user's instruction, the battery management unit can take corresponding measures to continue locking the battery cell. This method ensures that the user cannot continue to use the electric power before completing the payment, effectively ensuring rational use of battery resources and reducing consumption of the battery cell. At the same time, acting in accordance with the user's instruction, the battery management unit can satisfy the user's needs, which helps optimize stability of the vehicle.

FIG. 10 is a schematic flowchart of a fourth embodiment of a method for managing a vehicle battery provided by the present application. As shown in FIG. 10, the method for managing a vehicle battery includes:
S1001: obtaining battery cell consistency information, consistency information of a free electric power interval, and consistency information of a paid electric power interval in a battery assembly of a vehicle.

In this step, during a driving process of the vehicle, a battery management unit or a cloud platform detects a state of a battery cell in real time.

By obtaining the battery cell consistency information in the vehicle battery assembly, the battery management unit can understand a state and performance of each battery cell to ensure its consistency in an entire battery assembly. This helps avoid performance degradation or instability of the entire battery assembly due to aging or other problems of some battery cells.

At the same time, obtaining the consistency information of the free electric power interval and the consistency information of the paid electric power interval can help the battery management unit or the cloud platform better control power usage and management. By determining consistency of the free electric power interval and the paid electric power interval, the battery management unit can ensure that the user complies with preset rules and conditions when using power. This can avoid abuse of electric power or unauthorized use, ensuring rational use of battery resources.

S1002: performing a safety management on a faulty battery in the battery assembly according to the battery cell consistency information, the consistency information of the free electric power interval, and the consistency information of the paid electric power interval.

In this step, based on the battery cell consistency information, the consistency information of the free electric power interval, and the consistency information of the paid electric power interval obtained in step S1001, a safety management is performed on a faulty battery in the battery assembly.

Specifically, by analyzing the consistency information of the battery cell, it can be determined which cells may have problems, such as a capacity drop, abnormal voltage, etc. At the same time, by checking the consistency information of the free electric power interval and the paid electric power interval, it can be understood whether the user's charging behavior complies with regulations, and whether there is abnormal or improper use. Based on this information, the battery management unit or the cloud platform can promptly identify potentially faulty or abnormal batteries and take corresponding safety management measures, such as stopping use of the faulty battery, reminding maintenance personnel to replace or repair it, etc., so as to ensure safety and stability of the entire battery assembly.

For example, when an electric vehicle is on a long journey, a battery management unit continuously monitors electric power, temperature, and health of each battery cell. If one of the battery cells has abnormality, such as a capacity drop or excessive temperature, the battery management unit will immediately take corresponding measures, such as adjusting a charging and discharging rate or issuing an alert prompting the user to stop and check in time, so as to ensure safety and stability of the entire battery assembly.

The method for managing a vehicle battery provided in this embodiment is implemented by obtaining the battery cell consistency information in the vehicle battery assembly, the consistency information of the free electric power interval, and the consistency information of the paid electric power interval, and then performing a safety management on potentially faulty batteries according to this information. This method improves monitoring and management of the state of the battery cell, helps to identify and deal with faulty battery cells in a timely manner, thereby improving safety and stability of the vehicle.

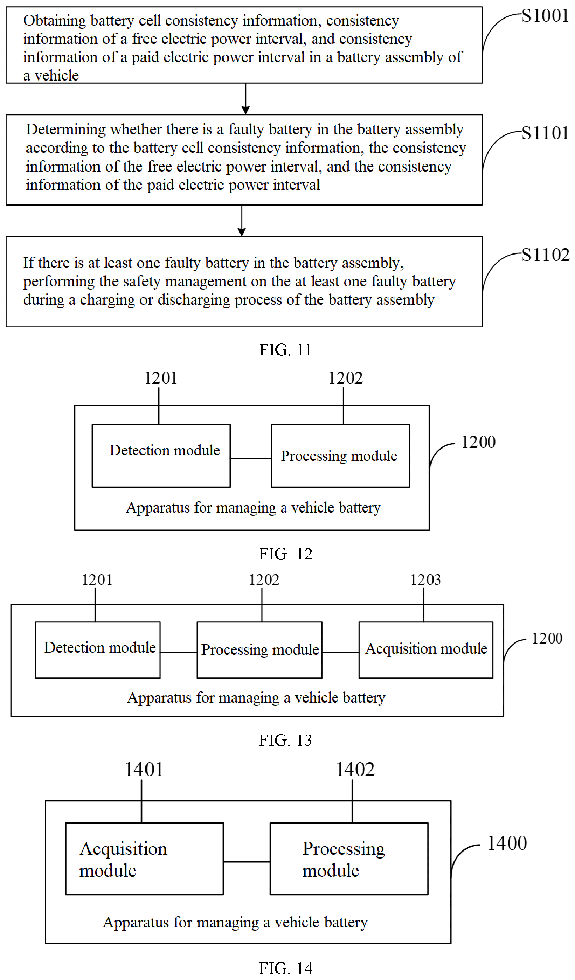

FIG. 11 is a schematic flowchart of a fifth embodiment of a method for managing a vehicle battery provided by the present application. As shown in FIG. 11, on the basis of the above embodiments, according to the battery cell consistency information, the consistency information of the free electric power interval, and the consistency information of the paid electric power interval, a safety management is performed on a faulty battery in the battery assembly, and the method for managing a vehicle battery includes:
S1101: determining whether there is a faulty battery in the battery assembly according to the battery cell consistency information, the consistency information of the free electric power interval, and the consistency information of the paid electric power interval.

In this step, based on the battery cell consistency information, the consistency information of the free electric power interval, and the consistency information of the paid electric power interval obtained in step S1001, a state and usage of each battery unit in the vehicle battery assembly can be understood, thereby determining whether there is a faulty battery in the battery assembly.

The battery cell consistency information can detect problems such as a battery capacity drop or voltage abnormality, while the consistency information of the free electric power interval and the consistency information of the paid electric power interval can be used to determine whether the user's charging behavior is standardized, and whether there is an abnormal or improper use. Once a battery is found to have abnormality, such as a voltage below a normal range, a capacity drop, or an abnormal temperature rise, it can be identified as a faulty battery, and a safety management measure such as stopping use of the battery can be implemented.

For example, there are 100 battery units in a battery assembly of an electric vehicle, 10 of which are faulty, with problems such as a capacity drop or voltage abnormality. Then after obtaining the battery cell consistency information, the consistency information of the free electric power interval, and the consistency information of the paid electric power interval, a battery management unit or a cloud platform can quickly identify these 10 faulty batteries and deal with them through safety management measures.

S1102: if there is at least one faulty battery in the battery assembly, performing a safety management on the at least one faulty battery during a charging or discharging process of the battery assembly.

In this step, based on step S1101, when determining whether there is a faulty battery in the battery assembly according to the battery cell consistency information, the consistency information of the free electric power interval, and the consistency information of the paid electric power interval, if there is at least one faulty battery in the battery assembly, then a safety management is performed on the at least one faulty battery during a charging or discharging process of the battery assembly.

For example, if a battery unit in a battery assembly of an electric vehicle is detected to be faulty, possibly due to its abnormal voltage or capacity drop, then when the vehicle is being charged or driving, a battery management unit or a cloud platform will perform special safety management on this faulty battery to ensure stable operation and safety of an entire battery assembly. The safety management measures include stopping charging of the battery, limiting its discharging rate, or reminding maintenance personnel to replace the battery in time to avoid potential safety problems.

According to the method for managing a vehicle battery provided in this embodiment, based on the battery cell consistency information, the consistency information of the free electric power interval, and the consistency information of the paid electric power interval, whether there is a faulty battery in the battery assembly is determined, and a safety management is performed on the faulty battery during charging or discharging. By adopting this method, faulty batteries can be determined and managed, thereby reducing safety problems caused by faulty batteries and extending a service life of the battery assembly.

On the basis of any of the above embodiments, in a possible implementation, the battery cell consistency information includes temperature abnormality information, voltage information, current information, and resistance information of each battery cell;
the consistency information of the free electric power interval includes voltage information, current information, and resistance information of the free electric power interval of each battery cell;
the consistency information of the paid electric power interval includes voltage information, current information, and resistance information of the paid electric power interval of each battery cell.

Specifically, the battery cell consistency information includes temperature abnormality information, voltage information, current information, and resistance information of each battery cell. The temperature abnormality information of each battery cell can help a battery management unit or a cloud platform detect whether any battery cell is overheated, so as to take timely measures for cooling or stopping charging and discharging operations to prevent safety accidents. Voltage information and current information can provide accurate data about electric power of the battery cell, helping the battery management unit or the cloud platform to determine a state and performance of the battery cell. Resistance information can be used to determine internal resistance of the battery cell, and thus to determine whether there is a fault or an aging phenomenon, so that corresponding safety management and maintenance can be carried out.

The consistency information of the free electric power interval includes voltage information, current information, and resistance information of the free electric power interval of each battery cell. By monitoring and recording voltage information and current information of each battery cell in the free electric power interval, the battery management unit or the cloud platform can accurately determine a remaining electric power of each battery cell and comprehensively consider a state of an entire battery assembly. The resistance information of the free electric power interval is used to determine an internal state and performance of the battery cell. The resistance of the battery cell reflects a conductive ability and a charge transport situation inside the battery cell. By monitoring and comparing the resistance information of each battery cell, the battery management unit or the cloud platform can identify abnormal or aging battery cells and take corresponding safety management measures.

The consistency information of the paid electric power interval includes voltage information, current information, and resistance information of the paid electric power interval of each battery cell. The voltage information refers to a voltage value of each battery cell in the paid electric power interval. A voltage level of the battery cell directly affects a total voltage of a system, so it is crucial to understand the voltage information of each battery cell. By monitoring and recording the voltage of each battery cell, it can be ensured that they are consistent within the paid electric power interval, avoiding abnormally high or low voltage of some battery cells leading to system performance degradation or safety problems. Current information refers to a current value of each battery cell in the paid electric power interval. Current is an important indicator for measuring a conversion rate of electrical energy in an energy storage system. Understanding the current information of each battery cell can help to determine whether it is working normally in the paid electric power interval, and can also detect possible current imbalance problems. Resistance information refers to a resistance value of each battery cell in the paid electric power interval. Resistance is an obstacle encountered by a current when passing through the battery, which will cause energy loss and heat generation. Understanding the resistance information of each battery cell can help to detect possible resistance imbalance problems.

This embodiment mainly introduces specific content of the battery cell consistency information, the consistency information of the free electric power interval, and the consistency information of the paid electric power interval. By comprehensively utilizing these consistency information, the battery management unit or the cloud platform can more comprehensively understand an overall state and a health condition of the battery assembly, which helps the battery management unit or the cloud platform to effectively perform a safety management on faulty batteries during charging or discharging, thereby ensuring safe operation and reliability of the battery assembly.

FIG. 12 is a schematic structural diagram of a first embodiment of an apparatus for managing a vehicle battery provided by the present application. As shown in FIG. 12, the apparatus for managing a vehicle battery 1200 includes:
a detection module 1201, configured to detect a remaining electric power of each battery cell of a vehicle in real time; and
a processing module 1202, configured to, if a remaining electric power of a battery cell reaches a preset paid electric power interval, lock use of the battery cell, and push confirmation information for paid electric power usage, the confirmation information for paid electric power usage including payment information provided to a user for paying a usage fee of the paid electric power interval.

Optionally, the processing module 1202 is further configured to:
if the payment confirmation information indicates that the user has paid the usage fee of the paid electric power interval of the battery cell, perform an unlocking process on the use of the battery cell, so that the battery cell continues to discharge.

Optionally, the processing module 1202 is further configured to:
if the payment confirmation information indicates that the user has not paid the usage fee of the paid electric power interval of the battery cell, continue locking the battery cell;
   or,
upon receiving instruction information sent by a mobile terminal of the user or a vehicle-mounted terminal indicating not to use the paid electric power of the battery cell, continue locking the battery cell.

The apparatus for managing a vehicle battery provided in this embodiment can be used to execute the method for managing a vehicle battery in any of the foregoing method embodiments, and the implementation principles and the technical effects therebetween are similar, which will not be repeated here.

FIG. 13 is a schematic structural diagram of a second embodiment of an apparatus for managing a vehicle battery provided by the present application. As shown in FIG. 13, the apparatus for managing a vehicle battery 1200 further includes:
an acquisition module 1203, configured to:
receive payment confirmation information sent by a cloud platform, the payment confirmation information being used to indicate whether the user has paid the usage fee of the paid electric power interval of the battery cell.

The apparatus for managing a vehicle battery provided in this embodiment can be used to execute the method for managing a vehicle battery in any of the foregoing method embodiments, and the implementation principles and the technical effects therebetween are similar, which will not be repeated here.

FIG. 14 is a schematic structural diagram of a third embodiment of an apparatus for managing a vehicle battery provided by the present application. As shown in FIG. 14, the apparatus for managing a vehicle battery 1400 includes:
an acquisition module 1401, configured to obtain battery cell consistency information, consistency information of a free electric power interval, and consistency information of a paid electric power interval in a battery assembly of a vehicle; and
a processing module 1402, configured to perform a safety management on a faulty battery in the battery assembly according to the battery cell consistency information, the consistency information of the free electric power interval, and the consistency information of the paid electric power interval.

Optionally, the processing module 1402 is further configured to:
determine whether there is a faulty battery in the battery assembly according to the battery cell consistency information, the consistency information of the free electric power interval, and the consistency information of the paid electric power interval; and
if there is at least one faulty battery in the battery assembly, perform a safety management on the at least one faulty battery during a charging or discharging process of the battery assembly.

Optionally, the battery cell consistency information includes temperature abnormality information, voltage information, current information, and resistance information of each battery cell;
the consistency information of the free electric power interval includes voltage information, current information, and resistance information of the free electric power interval of each battery cell; and
the consistency information of the paid electric power interval includes voltage information, current information, and resistance information of the paid electric power interval of each battery cell.

The apparatus for managing a vehicle battery provided in this embodiment can be used to execute the method for managing a vehicle battery in any of the foregoing method embodiments, and the implementation principles and the technical effects therebetween are similar, which will not be repeated here.

This embodiment provides a computer-readable storage medium, wherein the computer-readable storage medium stores computer-executable instructions, and the computer-executable instructions, when executed by a processor, are configured to implement the method for managing a vehicle battery in the above embodiments.

This embodiment further provides a computer program product, including a computer program, and the computer program, when executed by a processor, implements the method for managing a vehicle battery provided in any of the above embodiments.

The above embodiments are only illustrative of principles and effects of the present invention, and are not intended to limit the present invention. Those skilled in the art can modify or change the above embodiments without departing from the spirit and scope of the present invention. Therefore, all equivalent modifications or changes made by those skilled in the art without departing from the spirit and technical idea disclosed in the present invention shall still be covered by claims of the present invention.

## Claims

1. A method for managing a vehicle battery, comprising:
detecting a remaining electric power of each battery cell of a vehicle in real time; and
if a remaining electric power of a battery cell reaches a preset paid electric power interval, locking use of the battery cell, and pushing confirmation information for paid electric power usage, the confirmation information for paid electric power usage comprising payment information provided to a user for paying a usage fee of the paid electric power interval.

2. The method according to claim 1, further comprising:
receiving payment confirmation information sent by a cloud platform, the payment confirmation information being used to indicate whether the user has paid the usage fee of the paid electric power interval of the battery cell; and
if the payment confirmation information indicates that the user has paid the usage fee of the paid electric power interval of the battery cell, performing an unlocking process on the use of the battery cell, so that the battery cell continues to discharge.

3. The method according to claim 1 or 2, further comprising:
if the payment confirmation information indicates that the user has not paid the usage fee of the paid electric power interval of the battery cell, continuing locking the battery cell;
or,
upon receiving instruction information sent by a mobile terminal of the user or a vehicle-mounted terminal indicating not to use the paid electric power of the battery cell, continuing locking the battery cell.

4. A method for managing a vehicle battery, comprising:
obtaining battery cell consistency information, consistency information of a free electric power interval, and consistency information of a paid electric power interval in a battery assembly of a vehicle; and
performing a safety management on a faulty battery in the battery assembly according to the battery cell consistency information, the consistency information of the free electric power interval, and the consistency information of the paid electric power interval.

5. The method according to claim 4, wherein the performing the safety management on the faulty battery in the battery assembly according to the battery cell consistency information, the consistency information of the free electric power interval, and the consistency information of the paid electric power interval comprises:
determining whether there is the faulty battery in the battery assembly according to the battery cell consistency information, the consistency information of the free electric power interval, and the consistency information of the paid electric power interval; and
if there is at least one faulty battery in the battery assembly, performing the safety management on the at least one faulty battery during a charging or discharging process of the battery assembly.

6. The method according to claim 4 or 5, wherein the battery cell consistency information comprises temperature abnormality information, voltage information, current information, and resistance information of each battery cell;
the consistency information of the free electric power interval comprises voltage information, current information, and resistance information of the free electric power interval of each battery cell; and
the consistency information of the paid electric power interval comprises voltage information, current information, and resistance information of the paid electric power interval of each battery cell.

7. An apparatus for managing a vehicle battery, wherein the apparatus comprises:
a detection module, configured to detect a remaining electric power of each battery cell of a vehicle in real time; and
a processing module, configured to, if a remaining electric power of a battery cell reaches a preset paid electric power interval, lock use of the battery cell, and push confirmation information for paid electric power usage, the confirmation information for paid electric power usage comprising payment information provided to a user for paying a usage fee of the paid electric power interval.

8. An apparatus for managing a vehicle battery, wherein the method comprises:
an acquisition module, configured to obtain battery cell consistency information, consistency information of a free electric power interval, and consistency information of a paid electric power interval in a battery assembly of a vehicle; and
a processing module, configured to perform a safety management on a faulty battery in the battery assembly according to the battery cell consistency information, the consistency information of the free electric power interval, and the consistency information of the paid electric power interval.

9. A vehicle, wherein the method comprises:
a vehicle body, a battery assembly arranged inside the vehicle body, and a control unit;
the control unit is configured to execute the method for managing a vehicle battery according to any one of claims 1 to 6.

10. A computer-readable storage medium, wherein the computer-readable storage medium stores computer-executable instructions which, when executed by a processor, are configured to implement the method for managing a vehicle battery according to any one of claims 1 to 6.
